(19) Europäisches Patentamt / European Patent Office / Office européen des brevets

(11) **EP 3 291 033 B1**

## (12) FASCICULE DE BREVET EUROPEEN

(45) Date de publication et mention de la délivrance du brevet:
**13.03.2019 Bulletin 2019/11**

(51) Int Cl.:
***G05B 15/02*** *(2006.01)*     ***G05B 17/02*** *(2006.01)*

(21) Numéro de dépôt: **17187160.1**

(22) Date de dépôt: **22.08.2017**

(54) **SYSTÈME ET PROCÉDÉ D'ESTIMATION DU COMPORTEMENT THERMIQUE D'UN BÂTIMENT, POUR UN CONTRÔLE OPTIMAL DE CHAUFFAGE**

SYSTEM UND VERFAHREN ZUM ABSCHÄTZEN DES THERMISCHEN VERHALTENS EINES GEBÄUDES ZUR OPTIMALEN HEIZUNGSSTEUERUNG

SYSTEM AND METHOD FOR ESTIMATING THE THERMAL BEHAVIOUR OF A BUILDING, FOR OPTIMAL HEATING CONTROL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.08.2016 FR 1657902**

(43) Date de publication de la demande:
**07.03.2018 Bulletin 2018/10**

(73) Titulaire: **Electricité de France**
**75008 Paris (FR)**

(72) Inventeurs:
- **NABIL, Tahar**
  **77818 Moret sur Loing Cédex (FR)**
- **JICQUEL, Jean-Marc**
  **77250 Ecuelles (FR)**
- **GIRARD, Alexandre**
  **92500 Rueil-Malmaison (FR)**

- **ROUEFF, François**
  **75634 Paris Cédex 13 (FR)**

(74) Mandataire: **Regimbeau**
**20, rue de Chazelles**
**75847 Paris Cedex 17 (FR)**

(56) Documents cités:
**EP-A1- 2 781 976     FR-A1- 2 627 858 US-A1- 2014 312 128**

- **Chadia Zayane: "Identification d'un modèle de comportement thermique de bâtiment à partir de sa courbe de charge", , 11 janvier 2011 (2011-01-11), pages 1-151, XP055367577, Extrait de l'Internet: URL:https://tel.archives-ouvertes.fr/pastel-00590810/document [extrait le 2017-04-26]**

**Description**

DOMAINE TECHNIQUE

La présente invention concerne le domaine de l'estimation de la résistance thermique et des capacités thermiques d'un bâtiment.

La présente invention vise à assurer le contrôle optimal du chauffage de tels bâtiments.

L'invention concerne plus précisément la gestion de l'efficacité énergétique des bâtiments. L'efficacité énergétique renvoie au comportement thermique d'un bâtiment. Par comportement thermique, on entend en particulier l'évolution de la température intérieure, par rapport à des stimuli tels que les conditions météorologiques d'une part et les apports internes comme le chauffage d'autre part.

Plus précisément le comportement thermique d'un bâtiment dépend de différents facteurs que l'on peut globalement classer en trois catégories. Une première catégorie englobe les facteurs intrinsèques à la structure du bâtiment, tels que la composition du bâtiment et la surface à chauffer. Une seconde catégorie comprend les données météorologiques ayant une influence sur le bâtiment, telles que la température extérieure et les apports solaires. Une troisième catégorie regroupe les facteurs contrôlables par l'utilisateur, comprenant la puissance apportée par le système de chauffage, la température de consigne et les apports internes dus aux présences dans le bâtiment.

Dans ce contexte, évaluer et optimiser l'efficacité énergétique des bâtiments revient à poser le problème de l'optimisation des ressources, et notamment de la consommation liée au chauffage direct du bâtiment, tout en assurant le niveau de confort (thermique, fonctionnement des appareils, ...) requis par l'utilisateur.

ETAT DE LA TECHNIQUE

De manière pratique, l'efficacité énergétique repose sur l'étude de la courbe de charge d'un bâtiment et de l'existence de gisements de flexibilité. En optimisant les ressources, on peut par exemple analyser l'impact d'un tarif innovant, ou encore estimer le potentiel d'effacement du chauffage en période de pointe.

L'une des questions posées dans ce contexte est de déterminer comment optimiser les ressources.

Le levier d'action est généralement la commande de chauffage.

L'enjeu est donc celui de la commande optimale du chauffage (qui fonctionne en boucle fermée). Ceci est un problème d'optimisation qui dépend de contraintes, notamment le comportement dynamique de la température au sein du bâtiment.

Ainsi, pour fonctionner en pratique, ces services énergétiques ont besoin en premier lieu d'un modèle fiable du comportement thermique du bâtiment.

On a déjà publié une littérature très abondante sur les démarches classiques appliquées pour approcher une estimation du comportement thermique d'un bâtiment.

Des articles se rapportant au sujet sont répertoriées en fin de la présente description.

Cependant aucune des propositions jusqu'ici formulées ne donne totalement satisfaction.

Soit un bâtiment donné. La question posée est, ainsi d'obtenir à la fois un modèle simple et précis de celui-ci, afin ensuite d'en générer la commande optimale de chauffage. Ce modèle doit être capable de reproduire le comportement thermique dynamique du bâtiment observé, c'est-à-dire de décrire l'évolution de la température interne au bâtiment. Pour cela, les données du problème sont les chroniques d'observation du bâtiment : historique de l'évolution de la température intérieure, des conditions météorologiques extérieures (apports solaires, température extérieure), de la puissance de chauffage injectée, ainsi que de la puissance injectée liée aux autres apports chauffants internes au bâtiment.

Plusieurs travaux prennent le parti de travailler sur la base d'un pas de temps horaire voire tri-horaire ou journalier. Ce sont les premières solutions implémentées dans l'industrie pour faire de l'efficacité énergétique, en raison de leur simplicité de mise en oeuvre. Toutefois, un pas d'acquisition si grand impose deux contraintes : d'une part le modèle identifié est statique et non dynamique, et d'autre part il faut alors mesurer les sollicitations du bâtiment pendant typiquement toute une saison de chauffe avant de fournir le service. Le service d'efficacité énergétique est donc long à implémenter.

Dans la plupart des approches de la littérature (depuis Richalet (1991) jusqu'à plus récemment Bacher and Madsen (2011) ; Hazyuk et al. (2012) ; Naveros et al. (2014) on dispose d'une maison laboratoire maîtrisée (ou d'un modèle physique très détaillé), dont on peut imposer le signal de chauffage. En choisissant la commande de chauffage, on optimise les conditions d'estimation des paramètres car les données récoltées sont très "variées". Ainsi, les études privilégient dans ce cas des séquences binaires pseudo aléatoires (SBPA), au contenu fréquentiel proche du bruit blanc.

Quelques auteurs procèdent à l'identification d'un modèle global combinant système de chauffage et bâtiment à partir de données générées en boucle fermée. Pour cela, il faut modéliser la régulation du bâtiment, et c'est un point faible de la méthode ainsi proposée dans l'état de la technique.

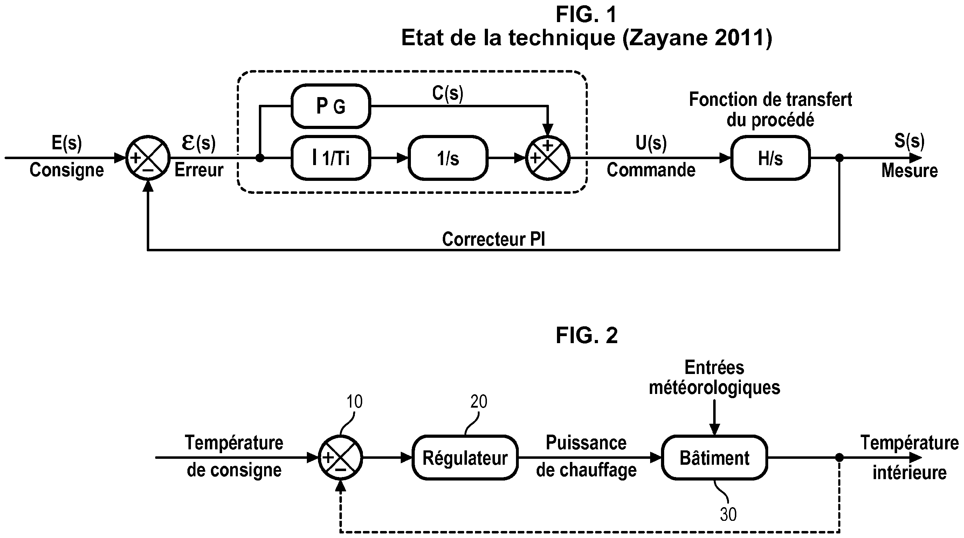

La thèse Zayane (2011) propose une méthode conforme au préambule de la revendication 1 annexée. Plus précisément cette thèse propose une méthode d'identification à partir de la courbe de charge du bâtiment et de la température de consigne. Cette thèse propose en effet de résoudre le problème de caractérisation du système en boucle fermée, en prenant en compte la régulation du chauffage, comme illustré sur la figure 1 annexée. Il en résulte que comme indiqué page 45 de la thèse, le modèle du système global résultant est basé non seulement sur les équations du modèle représentant le bâtiment, en l'espèce de type $R_3C_2$, mais également la rétroaction qui décrit le fonctionnement du régulateur caractérisé par un gain et un temps d'intégration. La méthode donne des résultats satisfaisants avec une modélisation linéaire du chauffage. Pour cela ce document préconise de considérer un régulateur de type Proportionnel Intégral, comme illustré sur la figure 1 annexée, adaptant la puissance de chauffe à l'écart entre la température ambiante et une température de consigne. L'avantage de cette méthode est qu'elle permet de s'affranchir de la mesure de la température intérieure, ce qui est un gain pratique important. Cependant en fonctionnement réel, le chauffage est en fait saturé, ce que reconnait le document, car la puissance délivrée est forcément bornée : elle est positive (pas de refroidissement) et ne peut pas dépasser un certain seuil (notamment lors de la relance du chauffage, on ne peut pas apporter une puissance infinie). Cette saturation induit une non-linéarité de la commande, et dans ces conditions la méthode de Zayane (:2011) n'est pas assez performante. Cela est d'ailleurs reconnu dans le document qui indique in fine en conclusion que l'analyse, associée à des données réelles, de la méthodologie proposée, a montré les limites des approximations faites sur le modèle, à savoir notamment la non prise en compte de la saturation et que pour pallier ces problèmes il serait proposé en guise de perspective de travail, une méthode de simulation hamiltonienne visant à intégrer les contraintes précitées, moyennant une linéarisation de la saturation, par exemple par une fonction sigmoïde. L'on comprend donc que les pistes d'amélioration envisagées par Zayane étaient orientées sur un traitement mathématique de la saturation constatée au niveau de la régulation.

De manière similaire, la thèse Berthou (2013) développe une approche boucle formée, mais la régulation est modélisée de façon extrêmement simplifiée, puisque le régulateur est supposé connu, tel que la température intérieure atteint immédiatement la consigne si la puissance à fournir est disponible, ce qui est exagéré au pas de temps utilisé (6 minutes). Ainsi, la modélisation de la boucle fermée est certes prometteuse, mais les résultats de la littérature connaissent encore quelques limites.

Le document EP 2 781 976 propose une autre approche d'évaluation et d'optimisation de consommations d'énergie pour le chauffage ou la climatisation d'un bâtiment. Cependant ce document se préoccupe essentiellement de développer une méthode qui s'appuie sur les niveaux d'équipements existants, sans ajout de capteurs spécifiques. Il propose pour cela d'utiliser des capteurs intégrés dans des capteurs de présence. Par ailleurs le modèle préconisé selon ce document et illustré sur sa figure 10 est assez rudimentaire et ne permet pas une modélisation fine. La solution proposée dans le document EP 2 781 976 est également contraignante du fait qu'elle requiert de mesurer l'état thermique du bâtiment via un capteur de température des murs correspondant au capteur 10 illustré sur la Figure 1 de ce document,. De manière plus critique, le modèle de comportement thermique de bâtiment décrit en EP 2 781 976 est simulé grâce à deux éléments : 1) des renseignements fournis par l'utilisateur et 2) un pilotage spécifique, c'est à dire imposé à l'utilisateur, des moyens de chauffage. Ce sont des éléments intrusifs pour l'utilisateur.

BASE DE L'INVENTION

La présente invention a ainsi pour objectif de perfectionner l'état de la technique en la matière.

La solution proposée dans le cadre de la présente invention a pour objectif d'obtenir une représentation dynamique fine fondée sur une représentation du fonctionnement d'un bâtiment en boucle ouverte, avec quantification de l'incertitude d'estimation, dans un contexte d'exploitation réelle dudit bâtiment en boucle fermée.

Cet objectif est atteint selon l'invention grâce à un procédé d'estimation du comportement thermique d'un bâtiment, pour un contrôle optimal de chauffage, comprenant les étapes consistant à :

- mesurer la température extérieure au bâtiment, avec une première sonde de température, mesurer la puissance apportée en interne au bâtiment à l'aide d'un premier ensemble de capteurs adaptés et mesurer les apports externes de puissance reçus par le bâtiment à l'aide d'un deuxième ensemble de capteurs adaptés,
- simuler le comportement thermique du bâtiment à l'aide d'un modèle de circuit électrique équivalent du type réseau RxCy, dans lequel x et y sont supérieurs ou égaux à 2,

caractérisé par le fait que :

- il comprend en outre l'étape de mesure de la température intérieure du bâtiment, avec une deuxième sonde de température,
- l'étape de mesure de la température extérieure, de la puissance apportée en interne, des apports externes et de la température intérieure, est opérée pendant une période de temps définie et avec un pas inférieur ou égal à 10 minutes,
- l'étape de simulation du comportement thermique du bâtiment à l'aide d'un modèle de circuit électrique équivalent du type réseau RxCy est opérée à l'aide de données de fonctionnement en boucle ouverte de la température extérieure, de la puissance apportée en interne, des apports externes, ainsi que de données relevées en boucle fermée mais exploitée en boucle ouverte de la température intérieure, sans modélisation de la régulation,

et qu'il comprend en outre l'étape consistant à fournir une représentation dynamique résultante du comportement thermique du bâtiment.

La représentation obtenue grâce à l'invention est optimale dans le sens où elle est déduite des données locales d'exploitation du bâtiment étudié, et non d'un modèle générique plus approximatif (par exemple construit à partir de la seule spécification « Réglementation Thermique 1970 »).

Par rapport au document EP 2 781 976 l'invention offre notamment les avantages de s'affranchir de l'obligation de mesurer l'état thermique du bâtiment via un capteur de température des murs correspondant au capteur 10 illustré sur la Figure 1 de ce document,. L'invention permet également de s'affranchir de l'obligation, pour simuler le modèle de comportement thermique de bâtiment, de fourniture de renseignements par l'utilisateur et d'un pilotage spécifique, imposé à l'utilisateur, des moyens de chauffage.

Selon d'autres caractéristiques avantageuses de l'invention :

- le modèle de circuit électrique équivalent utilisé est du type $R_3C_2$,
- il comprend en outre une étape consistant à quantifier l'incertitude par calcul des intervalles de confiance des paramètres,
- le procédé comprend une étape de pilotage du chauffage du bâtiment sur la base du modèle formé par la représentation dynamique du comportement thermique du bâtiment.

L'invention concerne également un système d'estimation du comportement thermique d'un bâtiment pour un contrôle optimal de chauffage, comprenant :

- une première sonde de température pour mesurer la température extérieure au bâtiment,
- un ensemble de capteurs adaptés pour mesurer la puissance apportée en interne au bâtiment,
- un ensemble de capteurs adapté pour mesurer les apports externes de puissance reçus par le bâtiment
- des moyens adaptés pour simuler le comportement thermique du bâtiment à l'aide d'un modèle de circuit électrique équivalent du type réseau RxCy, dans lequel x et y sont supérieurs ou égaux à 2,

caractérisé par le fait que il comprend en outre :

- une deuxième sonde de température pour mesurer la température intérieure du bâtiment,
- des moyens adaptés pour collecter les données de mesure précitées, température intérieure du bâtiment, température extérieure au bâtiment, puissance apportée en interne au bâtiment et apports externes de puissance reçus par le bâtiment à l'aide des capteurs, pendant une période de temps définie et avec un pas inférieur ou égal à 10 minutes, et pour opérer une simulation du comportement thermique du bâtiment sur la base du modèle de circuit électrique équivalent du type réseau RxCy à l'aide de données de fonctionnement en boucle ouverte, sans modélisation de la régulation et
- des moyens pour fournir une représentation dynamique résultante du comportement thermique du bâtiment.

DESCRIPTIF RAPIDE DES FIGURES

D'autres caractéristiques, buts et avantages de la présente invention apparaitront à la lecture de la description détaillée qui va suivre et en regard des dessins annexés donnés à titre d'exemple non limitatif et sur lesquels :

- La figure 1 représente la régulation Proportionnel Intégral utilisée dans le modèle préconisé dans le document antérieur Zayane (2011),
- La figure 2 représente un schéma bloc du comportement thermique du bâtiment retenu, en boucle ouverte, pour opérer la simulation de comportement thermique dans le cadre de l'invention,
- La figure 3 est une représentation du schéma électrique équivalent du modèle du bâtiment de type R3C2 retenu préférentiellement dans le cadre de la présente invention,
- La figure 4 représente schématiquement la structure d'un système d'estimation du comportement thermique d'un bâtiment conforme à la présente invention et
- La figure 5 représente schématiquement les étapes principales du procédé d'estimation du comportement thermique d'un bâtiment conforme à la présente invention.

DESCRIPTION DETAILLEE DE L'INVENTION

En préambule on rappelle que les problèmes posés à l'homme du métier sont de déterminer :

- Quel modèle simplifié choisir pour représenter le bâtiment ?
- Comment en estimer les paramètres à partir des données d'observation ?
- Comment quantifier l'incertitude d'estimation des paramètres ?

Dans le cadre de l'invention on considère que pour résoudre ces problématiques, on ne dispose pas généralement de la température de la consigne indiquée par l'utilisateur.
Ainsi, on ne dispose que de données de fonctionnement en boucle ouverte, bien que le bâtiment fonctionne en réalité en boucle fermée.
L'originalité de la solution proposée dans le cadre de la présente invention, par rapport aux solutions préconisées antérieurement selon l'état de l'art, repose notamment sur les enjeux suivants : le pas de temps du modèle et la problématique boucle ouverte / boucle fermée, ainsi que dans une certaine mesure sur la quantification de l'incertitude d'estimation.
L'enjeu du pas de temps est important car il conditionne la disponibilité du service pour l'utilisateur. En effet, quel que soit le pas de temps, il faut acquérir un grand nombre de données pour faire de l'estimation. Ainsi, le pas de temps prédétermine l'horizon temporel d'acquisition des données.
Comme indiqué précédemment plusieurs travaux de l'état de la technique préconisent de travailler au pas de temps horaire voire tri-horaire ou journalier. Toutefois, un tel pas d'acquisition conduit à un modèle statique et non dynamique, et impose typiquement des mesures pendant toute une saison de chauffe avant de fournir un résultat. Au contraire dans le cadre de la présente invention, la solution proposée repose sur un modèle dynamique, et l'estimation opérée avec un pas inférieur à 10 minutes est satisfaisante pour des durées d'observation de l'ordre de quelques semaines, typiquement 2 semaines.
La problématique boucle ouverte / boucle fermée est un enjeu fort de l'identification de modèle dynamique.
Pour aller plus loin que les études antérieurement proposées avec des données en boucle ouverte, il faut s'interroger sur la validité des méthodes algorithmiques et sur la qualité des estimations présentées pour des données générées en situation réelle de fonctionnement du bâtiment, c'est-à-dire en boucle fermée. Car c'est dans ces conditions moins favorables (moins de richesse dans les données acquises) que le service final peut être proposé. L'invention propose d'adresser ce point par des méthodes d'estimation de la variabilité des paramètres utilisés. Cette discussion n'est pas proposée par les publications précédemment citées, et c'est un inconvénient dans leur approche.
Le système de chauffage calcule la puissance à fournir pour chauffer la pièce en fonction de l'écart entre la consigne et la température effectivement mesurée.
Comme illustré sur la figure 2, en situation réelle, le bâtiment est exploité en boucle fermée, avec la boucle de rétroaction illustrée en pointillés. Un comparateur 10 compare en effet une température de consigne fixée à demande par un utilisateur avec la température intérieure réelle du bâtiment résultant de la commande d'un régulateur 20 piloté par le comparateur 10, qui définit la puissance de chauffage et du comportement thermique du bâtiment 30 influencé à la fois notamment par la puissance de chauffage appliquée sous la commande du régulateur 20 et par les entrées météorologiques.
Cependant le fait d'imposer que les données soient issues du fonctionnement réel du bâtiment est une contrainte supplémentaire. En effet, de manière générale, la qualité des estimations d'une procédure d'identification de modèle dépend de la qualité des données d'entrée, i.e. de la qualité des informations incluses dans ces données.
En boude ouverte, la séquence de chauffage peut être choisie arbitrairement, et donc de sorte qu'elle est la plus informative possible (contenu fréquentiel riche).
Cependant, ce n'est par nature pas possible en boucle fermée, et donc ce cas est plus défavorable. Les scénarios de température de consigne sont peu informatifs en général avec typiquement seulement une valeur de confort et une valeur de réduit.
Dans ce contexte, l'une des originalités fortes de l'approche développée dans le cadre de la présente invention pour proposer un modèle de comportement thermique de bâtiment est de s'appuyer non pas sur une valeur de température de consigne, réductrice, mais de proposer un service à partir de données récoltées sur l'exploitation normale du client.
L'avantage résultant de l'invention est que la solution proposée est donc très peu intrusive et sans impact, sur le confort pour l'utilisateur du bâtiment.
Pour permettre une interprétation physique du modèle, comme dans les références précédemment citées, le modèle retenu dans le cadre de la présente invention est un circuit électrique équivalent.

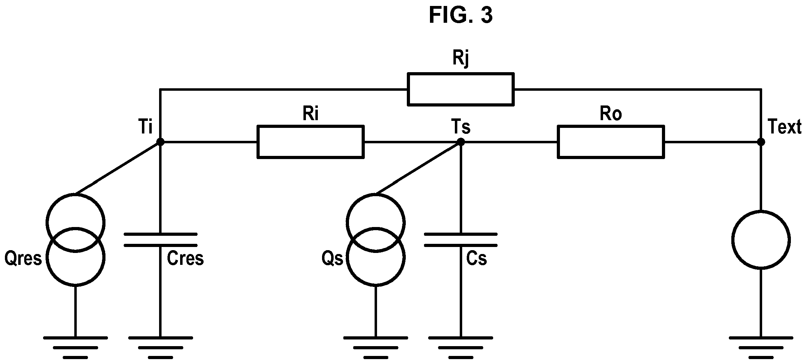

Comme indiqué précédemment selon la présente invention le modèle retenu peut être un modèle électrique équivalent $R_3C_2$ tel qu'illustré sur la figure 3.

On entend par modèle $R_3C_2$ un modèle comprenant 3 résistances Rf, Ri et Ro et 2 condensateurs Cs et Cres. Les deux résistances Ri et Ro sont en série sur une branche placée en parallèle de la résistance Rf. Le condensateur Cs relie le point milieu, référencé Ts, de la branche des deux résistances Ri et Ro, à la masse. Le condensateur Crcs relie le point commun aux résistances Rf et Ri, référencé Ti, à la masse. Un générateur de tension relie le point commun, référencé Text, des résistances Rf et Ro à la masse. Un générateur de courant Qs est placé en parallèle du condensateur Cs. Un générateur de courant Qres est placé en parallèle du condensateur Cres.

D'après l'analogie électrique de la conduction thermique, les températures sont associées aux potentiels du circuit, et les puissances aux courants.

Les deux capacités Cs et Cres permettent de prendre en compte les deux dynamiques du bâtiment une lente liée à l'inertie de la structure (Cs) et une rapide liée à l'air intérieur (Cres).

Plus en détails, le modèle $R_3C_2$ comme illustré sur la figure 3 fait apparaître trois températures :

- Text, la température extérieure, au point commun de Rf et Ro, qui est une donnée, grandeur mesurée, obtenue par un capteur dédié.
- Ts, la température de structure, au point commun de Ri et Ro, représentative de l'ensemble de l'enveloppe du bâtiment, est une grandeur non-mesurée (cachée).
- Ti, la température résultante au point d'air, au niveau du point commun à Rf et Ri, est mesurée par un capteur dédié.

De façon générale, il est difficile de définir une seule température pour un bâtiment entier à partir d'une mesure locale, néanmoins c'est une approximation courante pour travailler sur des modèles monozones.

La puissance résultante Qres comprend la puissance de chauffage Qch ainsi que la puissance dégagée par les apports internes (matériels et personnes) AI. La puissance Qs représente les apports solaires, qui chauffent la structure du bâtiment au noeud Ts, et non directement l'air intérieur. Dans le cadre de l'invention, les grandeurs Qres (Qch et. AI) et Qs sont mesurées localement par des capteurs adaptés.

Les résistances thermiques (en K/W), analogues à des résistances électriques, n'ont pas toutes la même signification physique :

- Ri et Ro sont les résistances thermiques des matériaux lourds formant les parois du bâtiment;
- Rf rassemble les résistances thermiques des parois légères, ainsi que les pertes dues au renouvellement d'air et les pertes hors renouvellement d'air. Rf peut être assimilé à la mise en parallèle de trois résistances élémentaires correspondant respectivement aux pertes dues au renouvellement d'air, aux pertes hors renouvellement d'air et à la résistance thermiques des parois légères externes du bâtiment.

Le modèle $R_3C_2$ est un modèle simplifié qui décrit la dynamique thermique d'un bâtiment monozone thermique selon les équations différentielles linéaires en temps continu suivantes:

$$\begin{cases} Qres = Cres\, \dfrac{dTi}{dt} + \dfrac{1}{Ri}\,(Ti - Ts) + \dfrac{1}{Rf}\,(Ti - Text) \\ \ Qs = Cs\, \dfrac{dTs}{dt} + \dfrac{1}{Ri}\,(Ts - Ti) + \dfrac{1}{Ro}\,(Ts - Text) \end{cases} \qquad (1)$$

L'avantage de cette représentation, qui permet de s'affranchir de l'équation représentant la dynamique du régulateur PI préconisé par Zayane, est d'obtenir une interprétation physique simple des cinq paramètres du circuit.

On rappelle que l'équation représentant la dynamique du régulateur PI préconisé par Zayane s'écrit comme suit :

$$Qch = K(E - Tint + 1/\tau \int (E - Tint))$$

Les paramètres du circuit se combinent pour calculer le coefficient de déperditions statiques dans le bâtiment GV et deux constantes de temps (rapide et lente). En effet, le GV est ici défini comme la conductance équivalente de la représentation $R_3C_2$ du bâtiment :

$$GV := \frac{1}{Rf} + \frac{1}{Ri+Ro} \qquad (2)$$

Les inventeurs ont déterminé que cette définition se justifie de la façon suivante : en supposant que le bâtiment est à l'équilibre, les dérivées temporelles s'annulent dans (1), et l'on obtient

$$Qres = GV\,(Ti - Text) - \frac{Ro}{Ro+Ri}\,Qs, \qquad (3)$$

Où GV est défini par (2). Cela correspond à la définition du GV comme coefficient statique qui quantifie la perte thermique à travers l'enveloppe du bâtiment par unité de la différence de température entre l'air intérieur et l'air extérieur.

Quant aux constantes de temps, elles sont liées à la dynamique du système. En posant $X_t = (Ti\,(t)\;Ts(t))'$ et $U_t := (Test(t)\;Qres(t)\;Qs\,(t))'$ les équations (1) s'écrivent de manière synthétique sous la forme

$$\frac{dXt}{dt} = AX_t + BU_t, \qquad (4)$$

où A et B sont des matrices de tailles respectives 2 x 2 et 2 x 3, paramétrées par les 3 résistances et les 2 capacités. L'évolution dynamique du bâtiment dépend des caractéristiques de la matrice d'état A, en particulier de ses valeurs propres. En notant $\lambda 1$ et $\lambda_2$ ces deux valeurs propres, les constantes de temps du bâtiment sont

$$\tau 1 = -\frac{1}{\lambda_1},\; \tau 2 = -\frac{1}{\lambda_2} \qquad (5)$$

La plus grande des constantes caractérise la dynamique lente du bâtiment (elle quantifie le temps nécessaire à la structure du bâtiment pour réagir à une modification de la température intérieure ou extérieure), l'autre la dynamique rapide (temps nécessaire à la masse d'air intérieur pour réagir à une modification de la puissance de chauffage). Ainsi, une bonne estimation des 3 résistances et des 2 capacités permet une bonne estimation des trois paramètres GV, $\tau_1$, $\tau_2$ L'invention permet ainsi de disposer d'une bonne représentation du comportement thermique statique et dynamique du bâtiment.

La démarche pour y parvenir consiste d'abord à transformer les équations (1), mises sous forme de représentation d'état linéaire discrète par des techniques classiques. Pour un pas de temps $\delta$ et à l'instant

$$k = k\delta,$$

on obtient la représentation

$$X_k = A_\delta X_{k-1} + B_\delta\,U_k + V_{k1} \qquad (6)$$

$$Y_k = CX_k + W_{k1} \qquad (7)$$

Où Vk est un bruit de modèle et Yk est une observation bruitée par Wk de la « vraie » température intérieure de modèle Ti contenue dans Xk.

En posant $\theta := \left(\frac{1}{Cres}\;\frac{1}{Cs}\;\frac{1}{Rf}\;\frac{1}{Ro}\;\frac{1}{Ri}\right)'$ on a $A_\delta = A_\delta(\theta)$ et $B_\delta = B_\delta(\theta)$, tandis que C = [10]

Dans la solution proposée dans le cadre de la présente invention, les paramètres $\theta$ sont ensuite estimés de manière standard par la méthode du maximum de vraisemblance.

Supposons que l'on dispose de n mesures de Yk et Uk, avec k = 1, ..., n. La fonction objectif à maximiser est la vraisemblance des n observations, i.e. la densité de probabilité associée à ces observations $y_1,...,y_n$. Elle se met sous la forme

$$\text{Log } L_n(\theta) = -\frac{1}{2}\sum_{k=1}^{n}\det\Sigma_k\,(\theta) - \frac{1}{2}\sum_{k=1}^{n}\varepsilon_k{}'\,(\theta)\,\Sigma_k^{-1}(\theta)\varepsilon_k\,(\theta) \quad (8)$$

Où $\varepsilon_k(\theta)$ est l'erreur de prédiction de l'observation $y_k$ sachant qu'on a observé $y_1,...,y_{k-1}$. $\Sigma_k(\theta)$ est la matrice de covariance de $\varepsilon_k(\theta)$ Il s'agit donc finalement de minimiser les erreurs de prédiction du modèle. Ces quantités se calculent classiquement, par exemple grâce à un filtre de Kalman discret, bien connu en traitement du signal (cf Douc et al. 2004, Chapitre 2)).

L'algorithme de maximisation en $\theta$ est l'algorithme EM (Expectation Maximisation, classique en statistique, voir la description de la démarche dans le cas théorique équivalent dans Shumnway and Stoffer (1982)).

Pour fournir une estimation de la variabilité des paramètres estimés, deux approches sont proposées selon l'invention:

1. De manière empirique, on peut employer une méthode bootstrap (cf Stoffer and Wall (1991)) qui fournit une approximation de la matrice de variance asymptotique des paramètres. Cette approche standard en statistique n'a pas été encore appliquée dans la littérature scientifique au contexte de l'identification de modèle du bâtiment.

2. De manière approximative, on peut considérer que le théorème central limite s'applique dans le cas de données générées en boucle fermée, et approcher la matrice de variance des paramètres estimés par la matrice d'observation de Fisher. Les inventeurs considèrent que cette démarche n'est pas évidente a priori. Elle n'a pas été justifiée dans l'état de l'art.

La démarche à la base de l'invention qui constitue le point fort de l'originalité de la solution proposée dans la présente invention, justifie cette approximation.

La justification est double:

(a) pratique, par une comparaison des estimations fournies par cette méthode avec une estimation de Monte-Carlo sur des données simulées.

(b) théorique, via des arguments statistiques.

Par ailleurs, la matrice de Fisher se calcule à partir de grandeurs elles-mêmes déjà calculées lors de l'itération de l'algorithme EM. Ainsi, le surcoût lié au calcul de la matrice asymptotique n'est pas conséquent.

La solution proposée selon la présente invention est avantageusement utilisée dans une optique de contrôle optimal. En effet, pour faire du contrôle optimal (voir par exemple Malisani (2012), sur la commande optimale de la puissance de chauffage pour minimiser la facture client, qui dépend d'un signal tarifaire et sous des contraintes de confort et de fonctionnement), il faut disposer d'un "bon" modèle de bâtiment : le contrôle s'effectue sous la contrainte que la température intérieure évolue selon la dynamique décrite par le modèle estimé par la procédure présentée selon l'invention. Le GV et les constantes de temps, avec leurs intervalles de confiance, permettent d'évaluer à quel point le modèle est "bon" donc utilisable pour du contrôle optimal, en étant interprétables physiquement.

La mise en oeuvre de la solution conforme à l'invention repose avant tout sur le déploiement de capteurs donnant accès aux grandeurs d'entrée du modèle : sondes pour les températures intérieure et extérieure, pyranomètre pour la mesure des apports solaires, compteur électrique (ou gaz) pour la consommation globale du bâtiment, au pas de temps 10 minutes au plus.

Dans l'idéal, il est souhaitable d'être capable de désagréger la consommation totale en la consommation due au chauffage et aux autres appareils qui apportent de la chaleur, et la consommation des appareils qui ne représentent pas d'apport thermique.

Selon un exemple particulier de mise en oeuvre de l'invention, à cette fin le système déployé comporte optionnellement un compteur électrique dédié au chauffage ou plus généralement aux appareils qui apportent de la chaleur au bâtiment.

En alternative, on peut cependant considérer que toute la consommation est due à des appareils qui contribuent au chauffage (en hiver).

Le pas d'échantillonnage des données doit être suffisamment fin pour que ces dernières contiennent les informations liées aux dynamiques rapides de l'ordre de la minute, 10 minutes au plus.

Un premier avantage de l'approche proposée selon l'invention réside dans la possibilité d'identifier un modèle de comportement dynamique d'ordre peu élevé d'un bâtiment, malgré un temps d'acquisition des données réduit. En effet, les simulations effectuées montrent que quelques semaines, typiquement deux semaines, de données au pas de temps de 10 minutes suffisent pour estimer tous les paramètres du circuit. Le coefficient GV est même estimé de manière robuste avec une seule semaine de données. Ce gain de temps opérationnel constitue un avantage certain par rapport aux méthodes statiques.

Le second avantage de la solution proposée selon l'invention est de répondre à la problématique liée au mode de génération des données : il est possible d'estimer un modèle boucle ouverte d'un bâtiment à partir de données générées en boucle fermée, sans modélisation de la régulation. En effet, elle justifie de manière statistique l'emploi du théorème central limite pour calculer les intervalles de confiances des paramètres du modèle dans cette configuration. Ainsi, la solution proposée donne une méthode simple d'estimation de modèle d'un bâtiment exploité en conditions réelles, comme chez n'importe quel utilisateur final. Cela représente une amélioration des méthodes existantes dans le sens que l'approche selon l'invention fournit également plus d'Informations sur le bâtiment étudié.

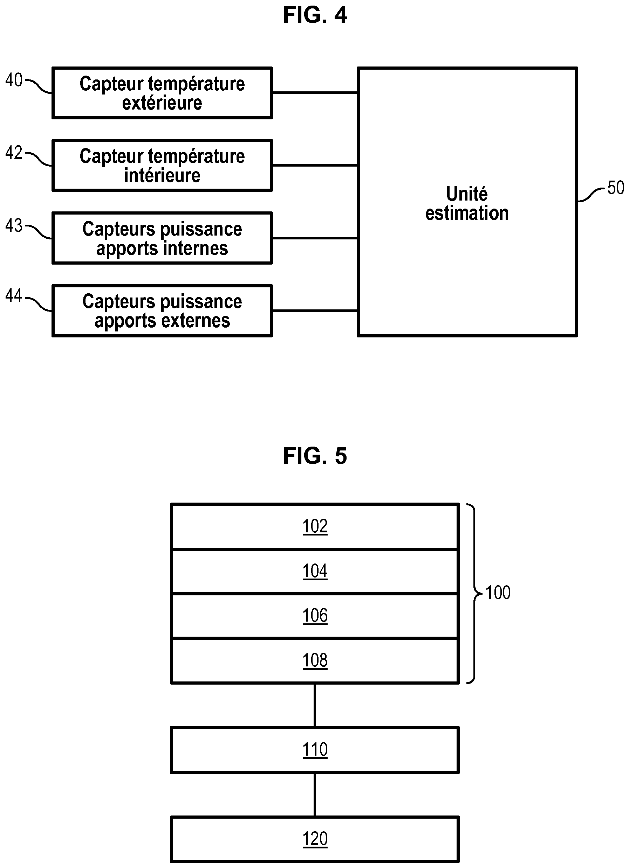

Comme indiqué précédemment l'invention propose ainsi un système d'estimation du comportement thermique d'un bâtiment pour un contrôle optimal de chauffage, comprenant comme illustré sur la figure 4 :

- une première sonde de température 40 pour mesurer la température extérieure au bâtiment,
- une deuxième sonde de température 42 pour mesurer la température intérieure du bâtiment,
- un ensemble de capteurs 43 adaptés pour mesurer la puissance apportée en interne au bâtiment,
- un ensemble de capteurs 44 adapté pour mesurer les apports externes de puissance reçus par le bâtiment,
- des moyens 50 adaptés pour mesurer, pendant une période de temps définie et avec un pas inférieur à 10 minutes, la température intérieure du bâtiment, la température extérieure au bâtiment, la puissance apportée en interne au bâtiment et les apports externes de puissance reçus par le bâtiment à l'aide des capteurs précités,
- des moyens 50 adaptés pour simuler le comportement thermique du bâtiment sur la base des équations représentant un modèle de circuit électrique équivalent du type réseau RxCy, et
- des moyens 50 adaptés pour fournir une représentation dynamique résultante du comportement thermique du bâtiment.

L'invention propose également, comme illustré sur la figure 5 annexée, un procédé d'estimation du comportement thermique d'un bâtiment pour un contrôle optimal de chauffage, caractérisé par le fait qu'il comprend les étapes consistant à :

- mesurer (étape générale 100), pendant une période de temps définie et avec un pas inférieur ou égal à dix minutes :

  - La température extérieure du bâtiment, avec une première sonde de température (étape 102),
  - La température intérieure au bâtiment, avec une seconde sonde de température étape 104),
  - La puissance apportée en interne au bâtiment à l'aide d'un ensemble de capteurs adaptés (étape 106),
  - Les apports externes de puissance reçus par le bâtiment à l'aide d'un ensemble de capteurs adaptés (étape 108),

    - Simuler (étape générale 110) le comportement thermique du bâtiment sur la base des équations représentant un modèle de circuit électrique équivalent du type réseau RxCy et
    - fournir (étape générale 120) une représentation dynamique résultante du comportement thermique du bâtiment.

Bien entendu la présente invention n'est pas limitée au mode de mise en oeuvre précité, mais s'étend à toutes variantes conformes à son esprit.

Le modèle retenu dans le cadre de l'invention n'est pas obligatoirement un circuit électrique équivalent de type $R_3C_2$.

Dans le cadre de l'invention, on peut utiliser une classe de modèles plus large : tout circuit électrique de type réseau RxCy avec x et y supérieur ou égaux à 2, peut convenir.

L'invention peut également s'appliquer aux cas de modèles multizones, par exemple en associant deux circuits pour un bâtiment composé de deux pièces aux gestions de température différentes.

De, même, l'algorithme d'estimation des paramètres par maximum de vraisemblance n'est pas unique, et il en existe d'autres dans la littérature (Newton-Raphson par exemple).

REFERENCES

- Bâcher, P. and Madsen, H. (2011). Identifying suitable models for the heat dynamics of buildings, Energy and Buildings, 43(7) :1511-1522.
- Berthou, T. (2013). Développement de modèles de bâtiment pour la prévision de charge de climatisation et l'élaboration de stratégies d'optimisation énergétique et d'effacement. PhD thesis, Ecole Nationale Supérieure des Mines de Paris.
- Berthou, T., Stabat, P., Salvazet, R., and Marchio, D. (2014). Development and validation of a gray box model to predict thermal behavior of occupied office buildings. Energy and Buildings, 74:91-100.
- Douc, R., Moulines, E., Rydéen, T., et al. (2004). Asymptotic properties of the maximum likelihood estimator in autoregressive with Markov regime. The Annals of statistics, 32(5):2254-2304.
- Hazyuk, I., Ghiaus, C., and Penhouet, D. (2012). Optimal temperature control of intermittently heated buildings using model prédictive control: Part I - building modeling. Building and Environment, 51:379-387.

- Jiménez, M., Madsen, H., and Andersen, K. K. (2008). Identification of the main thermal characteristics of building components using Matlab. Building and Environment, 43(2):170-180.
- Malisani, P. (2012). Pilotage dynamique de l'énergie du bâtiment par commande optimale sous contraintes utilisant la pénalisation intérieure. PhD thesis, Ecole Nationale Supérieure des Mines de Paris.
- Naveros, I, Bâcher, P., Ruiz, D., Jiménez, M., and Madsen, H. (2014). Setting up and validating a complex model for a simple homogeneous wall. Energy and Buildings, 70:303-317.
- Richalet, V. (1991). Caractérisation énergétique des bâtiments sur site. Identification de modèles dynamiques. Méthodes de signature énergétique. PhD thesis, INPG.
- Shumway, R. H. and Stoffer, D. S. (1982). An approach to time series smoothing and forecasting using the EM algorithm. Journal of time series analysis, 3(4):253-264.
- Stoffer, D. S. and Wall, K. D. (1991). Bootstrapping state-space models: Gaussian maximum likelihood estimation and the Kalman filter. Journal of the American statistical association, 86(416):1024-1033.
- Zayane, C. (2011). Identification d'un modèle de comportement thermique de bâtiment à partir de sa courbe de charge. PhD thesis, Ecole National Supérieure des Mines de Paris.

## Revendications

1. Procédé d'estimation du comportement thermique d'un bâtiment, pour un contrôle optimal de chauffage, comprenant les étapes consistant à :

   - mesurer la température extérieure au bâtiment, avec une première sonde de température (40), mesurer la puissance apportée en interne au bâtiment à l'aide d'un premier ensemble de capteurs (43) adaptés et mesurer les apports externes de puissance reçus par le bâtiment à l'aide d'un deuxième ensemble de capteurs adaptés (44),
   - simuler le comportement thermique du bâtiment à l'aide d'un modèle de circuit électrique équivalent du type réseau RxCy, dans lequel x et y sont supérieurs ou égaux à 2,

   **caractérisé par le fait que** :

   - il comprend en outre l'étape de mesure de la température intérieure du bâtiment, avec une deuxième sonde de température (42),
   - l'étape de mesure de la température extérieure, de la puissance apportée en interne, des apports externes et de la température intérieure, est opérée pendant une période de temps définie et avec un pas inférieur ou égal à 10 minutes,
   - l'étape de simulation du comportement thermique du bâtiment à l'aide d'un modèle de circuit électrique équivalent du type réseau RxCy est opérée à l'aide de données de fonctionnement en boucle ouverte de la température extérieure, de la puissance apportée en interne, des apports externes, ainsi que de données relevées en boucle fermée mais exploitée en boucle ouverte de la température intérieure, sans modélisation de la régulation,

   et qu'il comprend en outre l'étape consistant à fournir une représentation dynamique résultante du comportement thermique du bâtiment.

2. Procédé selon la revendication 1, **caractérisé en ce que** le modèle de circuit électrique équivalent utilisé est du type R3C2.

3. Procédé selon la revendication 2, **caractérisé en ce que** le modèle de circuit électrique équivalent du type R3C2 comprend 3 résistances et 2 condensateurs : une première résistance et une deuxième résistance (Ri, Ro) représentant les résistances thermiques des matériaux lourds formant les parois du bâtiment, en série sur une branche placée en parallèle d'une troisième résistance (Rf) représentant les résistances thermiques des parois légères, ainsi que les pertes dues au renouvellement d'air et les pertes hors renouvellement d'air, un premier condensateur (Cs) qui représente la dynamique lente du bâtiment liée a l'inertie de la structure et qui relie le point milieu, représentant la température (Ts) de structure, non mesurée, représentative de l'ensemble de l'enveloppe du bâtiment, de la branche des deux résistances série, à la masse, un deuxième condensateur (Cres) qui représente la dynamique rapide du bâtiment liée à l'air intérieur et qui relie le point commun à la première et à la troisième résistances (Ri, Rf), lequel point commun représente la température résultante au point d'air (Ti), à la masse, un générateur de tension qui relie le point commun, qui représente la température extérieure (Text), de la deuxième et de la troisième résistances (Ro, Rf) à la masse, un premier générateur de courant (Qs), qui représente les apports solaires qui chauffent la structure du bâtiment au noeud correspondant, et non directement l'air intérieur, placé en parallèle du premier condensateur (Cs) et un deuxième générateur de courant (Qres), qui représente la puissance de chauffage ainsi que la puissance dégagée par les apports internes, placé en parallèle du deuxième condensateur (Cres).

4.  Procédé selon l'une des revendications 1 à 3, **caractérisé en ce que** le modèle RxCy est un modèle $R_3C_2$ est un modèle qui décrit la dynamique thermique d'un bâtiment monozone thermique selon les équations différentielles linéaires en temps continu suivantes:

$$\begin{cases} Qres = Cres\ \dfrac{dTi}{dt}\ +\ \dfrac{1}{Ri}\ (Ti - Ts) + \dfrac{1}{Rf}\ (Ti - Text) \\ \quad Qs = Cs\ \dfrac{dTs}{dt} + \dfrac{1}{Ri}\ (Ts - Ti) + \dfrac{1}{R0}(Ts - Text) \end{cases}$$

5.  Procédé selon l'une des revendications 1 à 4, **caractérisé en ce qu'**il comprend en outre une étape consistant à quantifier une incertitude par calcul des intervalles de confiance des paramètres par une méthode du maximum de vraisemblance.

6.  Procédé selon la revendication 5, **caractérisé en ce que** l'étape de quantification de l'incertitude met en oeuvre une méthode de type bootstrap qui fournit une approximation de la matrice de variance asymptotique des paramètres.

7.  Procédé selon la revendication 5, **caractérisé en ce que** l'étape de quantification de l'incertitude met en oeuvre le théorème central limite permettant d'approcher la matrice de variance des paramètres estimés par la matrice d'observation de Fisher.

8.  Procédé selon l'une des revendications 1 à 7, **caractérisé en ce qu'**il comprend en outre une étape de pilotage du chauffage du bâtiment sur la base du modèle formé par la représentation dynamique du comportement thermique du bâtiment.

9.  Procédé selon l'une des revendications 1 à 8, **caractérisé en ce que** l'étape de mesure est opérée sur une période d'observations de l'ordre de quelques semaines, typiquement 2 semaines.

10. Procédé selon l'une des revendications 1 à 9, **caractérisé en ce que** le pas de temps des mesures est de l'ordre de la minute.

11. Procédé selon l'une des revendications 1 à 10, **caractérisé en ce que** pour une application à un modèle multizone tel qu'un bâtiment composé de deux pièces aux gestions de température différentes, il associe deux modèle de circuit électrique équivalent du type réseau RxCy spécifiques.

12. Procédé selon l'une des revendications 1 à 11, **caractérisé en ce que** les étapes de mesure et de simulation comprennent une sous étape de désagrégation de la consommation électrique totale en la consommation due au chauffage et aux autres appareils qui apportent de la chaleur d'une part, et la consommation des appareils qui ne représentent pas d'apport thermique d'autre part.

13. Système d'estimation du comportement thermique d'un bâtiment pour un contrôle optimal de chauffage, comprenant :

   - une première sonde de température (40) pour mesurer la température extérieure au bâtiment,
   - un ensemble de capteurs (43) adaptés pour mesurer la puissance apportée en interne au bâtiment,
   - un ensemble de capteurs (44) adapté pour mesurer les apports externes de puissance reçus par le bâtiment
   - des moyens (50) adaptés pour simuler le comportement thermique du bâtiment à l'aide d'un modèle de circuit électrique équivalent du type réseau RxCy, dans lequel x et y sont supérieurs ou égaux à 2,

   **caractérisé par le fait que** il comprend en outre :

   - une deuxième sonde de température (42) pour mesurer la température intérieure du bâtiment,
   - des moyens adaptés pour collecter les données de mesure précitées, température intérieure du bâtiment, température extérieure au bâtiment, puissance apportée en interne au bâtiment et apports externes de puissance reçus par le bâtiment à l'aide des capteurs, pendant une période de temps définie et avec un pas inférieur ou égal à 10 minutes, et pour opérer une simulation du comportement thermique du bâtiment sur la base du modèle de circuit électrique équivalent du type réseau RxCy à l'aide de données de fonctionnement en boucle ouverte, sans modélisation de la régulation et
- des moyens pour fournir une représentation dynamique résultante du comportement thermique du bâtiment.

14. Système selon la revendication 13, **caractérisé en ce qu'**il comprend un pyranomètre pour la mesure des apports solaires.

15. Système selon l'une des revendications 13 ou 14, **caractérisé en ce qu'**il comprend un compteur électrique ou gaz pour mesurer la consommation globale du bâtiment.

16. Système selon l'une des revendications 13 à 15, **caractérisé en ce qu'**il comprend un compteur électrique dédié aux appareils qui apportent de la chaleur pour permettre une sous étape de désagrégation de la consommation électrique totale en la consommation due au chauffage et aux autres appareils qui apportent de la chaleur d'une part, et la consommation des appareils qui ne représentent pas d'apport thermique d'autre part.


**Patentansprüche**

1. Einschätzungsverfahren des thermischen Verhaltens eines Gebäudes für eine optimale Kontrolle der Heizung, umfassend die Schritte, bestehend in:

   - Messen der Außentemperatur des Gebäudes mit einer ersten Temperatursonde (40), Messen der in das Gebäude eingebrachten Leistung mithilfe einer ersten Gruppe von geeigneten Sensoren (43) und Messen der von dem Gebäude empfangenen externen Leistungseinträge mithilfe einer zweiten Gruppe von geeigneten Sensoren (44) ;
   - Simulieren des thermischen Verhaltens des Gebäudes mithilfe eines zu dem Typ Netz RxCy äquivalenten elektrischen Schaltkreismodells, bei dem x und y größer als oder gleich 2 sind,
   **gekennzeichnet durch** die Tatsache, dass:

   - es darüber hinaus den Messschritt der Innentemperatur des Gebäudes mit einer zweiten Temperatursonde umfasst;
   - der Messschritt der Außentemperatur, der intern eingebrachten Leistung, der externen Einträge und der Innentemperatur während einer definierten Zeitperiode und mit einem Schritt von weniger als oder gleich 10 Minuten durchgeführt ist;
   - der Simulationsschritt des thermischen Verhaltens des Gebäudes mithilfe eines elektrischen Schaltkreismodells vom Typ Netz RxCy mithilfe von Betriebsdaten in offener Schleife der Außentemperatur, der intern eingebrachten Leistung, der externen Einträge sowie der in geschlossener Schleife, jedoch in offener Schleife betrieben ist, der Innentemperatur, ohne Modellgestaltung der Einstellung durchgeführt ist;

   und es darüber hinaus den Schritt umfasst, der darin besteht, eine dynamische Darstellung des thermischen Verhaltens des Gebäudes zu liefern.

2. Verfahren gemäß Anspruch 1, **dadurch gekennzeichnet, dass** das verwendete elektrische Schaltkreismodul vom Typ R3C2 ist.

3. Verfahren gemäß Anspruch 2, **dadurch gekennzeichnet, dass** das elektrische Schaltkreismodell vom Typ R3C2 3 Widerstände und 2 Kondensatoren umfasst: einen ersten Widerstand und einen zweiten Widerstand (Ri, Ro), die die thermischen Widerstände der die Wände des Gebäudes bildenden schweren Materialien darstellen, in Serie auf einem Zweig, der parallel zu einem dritten Widerstand (Rf) platziert ist, der die thermischen Widerstände der leichten Wände darstellt, sowie die Verluste, die auf die Lufterneuerung zurückzuführen sind, und die Verluste außerhalb der Lufterneuerung, einen ersten Kondensator (Cs), der die langsame Dynamik des Gebäudes darstellt, die mit der Trägheit der Struktur zusammenhängt und die den Mittelpunkt, der die nicht gemessene Temperatur (Ts) der Struktur darstellt, die die Gruppe der Hülle des Gebäudes darstellt, des Zweigs der zwei Serienwiderstände, mit der Masse verbindet, einen zweiten Kondensator, der die rasche Dynamik des Gebäudes darstellt, die mit der Innenluft zusammenhängt und die den gemeinsamen Punkt mit dem ersten und dem dritten Widerstand (Ri, Rf), wobei der genannte gemeinsame Punkt die aus dem Luftpunkt (Ti) stammende Temperatur darstellt, mit der Masse verbindet, einen Spannungserzeuger, der den gemeinsamen Punkt, der die Außentemperatur (Text) des zweiten und des dritten Widerstandes (Ro, Rf) darstellt, mit der Masse verbindet, einen ersten Stromerzeuger (Qs), der die Sonneneinträge darstellt, die die Struktur des Gebäudes mit dem entsprechenden Knoten und nicht die Innenluft erhitzen, der parallel zu dem ersten Kondensator (Cs) platziert ist, und einen zweiten Stromgenerator (Qres), der die Heizleistung sowie die von den Inneneinträgen abgegebene Leistung, der parallel zu dem zweiten Generator (Cres) platzier ist.

4. Verfahren gemäß einem der Ansprüche 1 bis 3, **dadurch gekennzeichnet, dass** das Modell RxCy ein Modell $R_3C_2$ ist, das die thermische Dynamik eines Einzonengebäudes gemäß den folgenden linearen Differenzial-Gleichungen zeitlich stetig beschreibt:

$$\begin{cases} Qres = Cres \dfrac{dTi}{dt} + \dfrac{1}{Ri}(Ti - Ts) + \dfrac{1}{Rf}(Ti - Text) \\ Qs = Cs \dfrac{dTs}{dt} + \dfrac{1}{Ri}(Ts - Ti) + \dfrac{1}{R0}(Ts - Text) \end{cases}$$

5. Verfahren gemäß einem der Ansprüche 1 bis 4, **dadurch gekennzeichnet, dass** es darüber hinaus einen Schritt umfasst, der im Quantifizieren einer Unsicherheit per Berechnung der Konfidenzintervalle der Parameter einer Methode der maximalen Wahrscheinlichkeit besteht.

6. Verfahren gemäß Anspruch 5, **dadurch gekennzeichnet, dass** der Quantifizierungsschritt der Unsicherheit eine Methode vom Typ Bootstrap umsetzt, die eine Approximation der asymptotischen Varianzmatrix der Parameter liefert.

7. Verfahren gemäß Anspruch 5, **dadurch gekennzeichnet, dass** der Quantifizierungsschritt der Unsicherheit den zentralen Grenzlehrsatz umsetzt, der das Annähern der Varianzmatrix der durch die Beobachtungsmatrix nach Fisher geschätzten Parameter erlaubt.

8. Verfahren gemäß einem der Ansprüche 1 bis 7, **dadurch gekennzeichnet, dass** es darüber hinaus einen Steuerschritt der Heizung des Gebäudes auf der Grundlage des Modells umfasst, das von der dynamischen Darstellung des thermischen Verhaltens des Gebäudes gebildet ist.

9. Verfahren gemäß einem der Ansprüche 1 bis 8, **dadurch gekennzeichnet, dass** der Messschritt auf einem Beobachtungszeitraum in der Größenordnung von einigen Wochen, typischerweise 2 Wochen, betrieben ist.

10. Verfahren gemäß einem der Ansprüche 1 bis 9, **dadurch gekennzeichnet, dass** der Zeitschritt der Messungen die Größenordnung einer Minute beträgt.

11. Verfahren gemäß einem der Ansprüche 1 bis 10, **dadurch gekennzeichnet, dass** für eine Anwendung auf einem Multizonenmodell, wie z. B. einem sich aus zwei Teilen zusammengesetzten Gebäude mit unterschiedlichen Temperaturverwaltungen, es zwei zu dem Typ Netz RxCy äquivalente, spezifische elektrische Schaltkreismodele verbindet.

12. Verfahren gemäß einem der Ansprüche 1 bis 11, **dadurch gekennzeichnet, dass** die Mess- und Simulationsschritte einen Teilschritt der Aufteilung des elektrischen Gesamtverbrauchs in den Verbrauch, der auf die Heizung und auf die anderen Geräte, die Wärme einbringen, einerseits, und den Verbrauch der Geräte, die keinen thermischen Eintrag darstellen, andererseits, zurückzuführen ist, umfassen.

13. Einschätzungssystem des thermischen Verhaltens eines Gebäudes für eine optimale Kontrolle der Heizung, umfassend:

    - eine erste Temperatursonde (40) zum Messen der Außentemperatur des Gebäudes,
    - eine Gruppe von Sensoren (43), die zum Messen der intern im Gebäude eingebrachten Leistung geeignet sind,

- eine Gruppe von Sensoren (44), die zum Messen der extern von dem Gebäude empfangene Leistung geeignet sind,
- Mittel (50), die zum Simulieren des thermischen Verhaltens des Gebäudes mithilfe eines elektrischen Schaltkreismodells vom Typ Netz RxCy geeignet sind, wobei x und y größer als oder gleich 2 sind,
**gekennzeichnet durch** die Tatsache, dass es darüber hinaus umfasst:

- eine zweite Temperatursonde (42) zum Messen der Innentemperatur des Gebäudes,
- Mittel, die zum Erfassen der vorgenannten Messdaten, der Innentemperatur des Gebäudes, der Außentemperatur des Gebäudes, der intern in das Gebäude eingebrachten Leistung und der externen Einträge der Leistung, die von dem Gebäude empfangen werden, während einer definierten Zeitperiode und mit einem Schritt von weniger als oder gleich 10 Minuten mithilfe der Sensoren und zum Durchführen einer Simulation des thermischen Verhaltens des Gebäudes auf der Grundlage des zu dem Typ Netz RyCy äquivalenten elektrischen Schaltkreismodells mithilfe von Betriebsdaten in offener Schleife ohne Modellgestaltung der Regulierung geeignet sind, und
- Mittel zum Liefern einer dynamischen Darstellung, die aus dem thermischen Verhalten des Gebäudes resultiert.

**14.** System gemäß Anspruch 13, **dadurch gekennzeichnet, dass** es ein Pyranometer zum Messen der Sonneneinträge umfasst.

**15.** System gemäß einem der Ansprüche 13 oder 14, **dadurch gekennzeichnet, dass** es einen Strom- oder Gaszähler zum Messen des Gesamtverbrauchs des Gebäudes umfasst.

**16.** System gemäß einem der Ansprüche 13 bis 15, **dadurch gekennzeichnet, dass** es einen Stromzähler umfasst, der den Geräten dediziert ist, die Wärme einbringen, um einen Teilschritt der Aufteilung des gesamten Stromverbrauchs, der auf die Heizung und die anderen Geräte zurückzuführen ist, die Wärme einbringen, einerseits, und den Verbrauch der Geräte, die keinen Wärmeeintrag darstellen, andererseits, zu erlauben.


## Claims

**1.** Method for estimating the thermal behaviour of a building, for an optimum control of heating, comprising the steps consisting in:

- measuring the temperature outside the building, with a first temperature probe (40), measuring the power brought internally to the building using a first set of suitable sensors (43) and measuring the external power supplies received by the building using a second set for suitable sensors (44),
- simulating the thermal behaviour of the building using an electric circuit model equivalent to the RxCy network type, wherein x and y are greater than or equal to 2,

**characterised by** the fact that:

- it further comprises the step of measuring the temperature inside the building, with a second temperature probe (42),
- the step of measuring the outside temperature, the power brought internally, the external supplies and the inside temperature, is carried out during a defined period of time and with a step less than or equal to 10 minutes,
- the step of simulating the thermal behaviour of the building using an electric circuit model equivalent to the RxCy network type is carried out using open-loop operating data of the outside temperature, the power brought internally, external supplies, as well as data taken in a closed loop but operated in an open loop of the inside temperature, without modelling the regulation,

and that it further comprises the step consisting in providing a resulting dynamic representation of the thermal behaviour of the building.

**2.** Method according to claim 1, **characterised in that** the equivalent electric circuit model used is of the R3C2 type.

**3.** Method according to claim 2, **characterised in that** the electric circuit model equivalent of the R3C2 type comprises 3 resistors and 2 capacitors: a first resistor and a second resistor (Ri, Ro) representing the thermal resistances of the heavy materials forming the walls of the building, in series on a branch placed in parallel with a third resistor (Rf) representing the thermal resistances of the light walls, as well as the losses due to the refreshing of the air and the losses outside of refreshing the air, a first capacitor (Cs) that represents the slow dynamic of the building linked to the inertia of the structure and which connects the middle point, representing the temperature (Ts) of the structure, not measured, representative of the entire envelope of the building, of the branch of the two series resistors, to the ground, a second capacitor (Cres) that represents the fast dynamic of the building linked to the inside air and which connects the point common to the first and to the third resistors (Ri, Rf), which common point represents the resulting temperature at the air point (Ti), at the ground, a voltage generator that connects the common point, that represents the outside temperature (Text), the second and the third resistors (Ro, Rf) at the ground, a first current generator (Qs), that represents the solar supplies that heat the structure of the building and corresponding node, and not directly the inside air, placed in parallel with the first capacitor (Cs) and a second current generator (Qres), that represents the heating power as well as the power released by the internal supplies, placed in parallel with the second capacitor (Cres).

4. Method according to one of claims 1 to 3, **characterised in that** the RxCy model is a $R_3C_2$ is a model that describes the thermal dynamics of a thermal monozone building according to the following continuous-time linear differential equations:

$$\begin{cases} Qres = Cres\, \dfrac{dTi}{dt} + \dfrac{1}{Ri}\,(Ti - Ts) + \dfrac{1}{Rf}\,(Ti - Text) \\ Qs = Cs\, \dfrac{dTs}{dt} + \dfrac{1}{Ri}\,(Ts - Ti) + \dfrac{1}{R0}\,(Ts - Text) \end{cases}$$

5. Method according to one of claims 1 to 4, **characterised in that** it further comprises a step consisting in quantifying an uncertainty by calculating confidence intervals of the parameters via a maximum-likelihood method.

6. Method according to claim 5, **characterised in that** the step of quantifying the uncertainty implements a method of the bootstrap type that provides an approximation of the asymptotic variance matrix of the parameters.

7. Method according to claim 5, **characterised in that** the step of quantifying the uncertainty implements the central limit theorem making it possible to approach the variance matrix of the parameters estimated by the Fisher observation matrix.

8. Method according to one of claims 1 to 7, **characterised in that** it further comprises a step of controlling the heating of the building based on the model formed by the dynamic representation of the thermal behaviour of the building.

9. Method according to one of claims 1 to 8, **characterised in that** the step of measuring is carried out over a period of observations of about a few weeks, typically 2 weeks.

10. Method according to one of claims 1 to 9, **characterised in that** the step of times of the measurements is about a minute.

11. Method according to one of claims 1 to 10, **characterised in that** for an application to a multizone model such as a building comprised of two rooms with different temperature managements, it associates two electric circuit models equivalent of the specific RxCy network type.

12. Method according to one of claims 1 to 11, **characterised in that** the steps of measuring and of simulating include a sub-step of disaggregation of the total electrical consumption in consumption due to the heating and to the other devices that provide heat on the one hand, and the consumption of the devices which do not represent any supply of heat on the other hand.

13. System for estimating the thermal behaviour of a building for an optimum control of heating, comprising:

   - a first temperature probe (40) for measuring the temperature outside the building,
   - a set of suitable sensors (43) for measuring the power brought internally to the building,
   - a suitable set of sensors (44) for measuring the external supplies of power received by the building
   - suitable means (50) for simulating the thermal behaviour of the building using an equivalent electric circuit model of the RxCy network type, wherein x and y are greater than or equal to 2,

**characterised by** the fact that it further comprises:

- a second temperature probe (42) for measuring the inside temperature of the building,
- suitable means for collecting the aforementioned measurement data, inside temperature of the building, temperature outside the building, power brought internally to the building and external supplies of power received by the building using sensors, during a defined period of time and with a step less than or equal to 10 minutes, and in order to carry out a simulation of the thermal behaviour of the building based on the equivalent electric circuit model of the RxCy network type using open-loop operating data, without modelling the regulation and
- means for providing a resulting dynamic representation of the thermal behaviour of the building.

14. System according to claim 13, **characterised in that** it comprises a pyranometer for measuring the solar supplies.

15. System according to one of claims 13 or 14, **characterised in that** it comprises an electric or gas meter for measuring the global consumption of the building.

16. System according to one of claims 13 to 15, **characterised in that** it comprises an electric meter dedicated to the devices that provide heat in order to allow for a sub-step of disaggregation of the total electrical consumption into the consumption due to the heating and to the other devices that supply heat on the one hand, and the consumption of the devices that do not represent any thermal supply on the other hand.

**FIG. 1**
**Etat de la technique (Zayane 2011)**

P G

C(s)

E(s)
Consigne

$\mathcal{E}$(s)
Erreur

I 1/Ti

1/s

U(s)
Commande

Fonction de transfert
du procédé

H/s

S(s)
Mesure

Correcteur PI

**FIG. 2**

Entrées
météorologiques

10

20

Température
de consigne

Régulateur

Puissance
de chauffage

Bâtiment

Température
intérieure

30

EP 3 291 033 B1

FIG. 3

## FIG. 4

40 — Capteur température extérieure

42 — Capteur température intérieure

43 — Capteurs puissance apports internes

44 — Capteurs puissance apports externes

Unité estimation — 50

## FIG. 5

102

104

106

108

} 100

110

120

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2781976 A

**Littérature non-brevet citée dans la description**

- **SHUMNWAY ; STOFFER.** classique en statistique, voir la description de la démarche dans le cas théorique équivalent. *Expectation Maximisation,* 1982
- **BÂCHER, P. ; MADSEN, H.** Identifying suitable models for the heat dynamics of buildings. *Energy and Buildings,* 2011, vol. 43 (7), 1511-1522
- Développement de modèles de bâtiment pour la prévision de charge de climatisation et l'élaboration de stratégies d'optimisation énergétique et d'effacement. **BERTHOU, T.** PhD thesis. Ecole Nationale Supérieure des Mines de Paris, 2013
- **BERTHOU, T. ; STABAT, P. ; SALVAZET, R. ; MARCHIO, D.** Development and validation of a gray box model to predict thermal behavior of occupied office buildings. *Energy and Buildings,* 2014, vol. 74, 91-100
- **DOUC, R. ; MOULINES, E. ; RYDÉEN, T. et al.** Asymptotic properties of the maximum likelihood estimator in autoregressive with Markov regime. *The Annals of statistics,* 2004, vol. 32 (5), 2254-2304
- **HAZYUK, I. ; GHIAUS, C. ; PENHOUET, D.** Optimal temperature control of intermittently heated buildings using model prédictive control: Part I - building modeling. *Building and Environment,* 2012, vol. 51, 379-387
- **JIMÉNEZ, M. ; MADSEN, H. ; ANDERSEN, K. K.** Identification of the main thermal characteristics of building components using Matlab. *Building and Environment,* 2008, vol. 43 (2), 170-180

- Pilotage dynamique de l'énergie du bâtiment par commande optimale sous contraintes utilisant la pénalisation intérieure. **MALISANI, P.** PhD thesis. Ecole Nationale Supérieure des Mines de Paris, 2012
- **NAVEROS, I ; BÂCHER, P. ; RUIZ, D. ; JIMÉNEZ, M. ; MADSEN, H.** Setting up and validating a complex model for a simple homogeneous wall. *Energy and Buildings,* 2014, vol. 70, 303-317
- Caractérisation énergétique des bâtiments sur site. Identification de modèles dynamiques. **RICHALET, V.** Méthodes de signature énergétique. PhD thesis. INPG, 1991
- **SHUMWAY, R. H. ; STOFFER, D. S.** An approach to time series smoothing and forecasting using the EM algorithm. *Journal of time series analysis,* 1982, vol. 3 (4), 253-264
- **STOFFER, D. S. ; WALL, K. D.** Bootstrapping state-space models: Gaussian maximum likelihood estimation and the Kalman filter. *Journal of the American statistical association,* 1991, vol. 86 (416), 1024-1033
- Identification d'un modèle de comportement thermique de bâtiment à partir de sa courbe de charge. **ZAYANE, C.** PhD thesis. Ecole National Supérieure des Mines de Paris, 2011